# EUROPEAN PATENT SPECIFICATION

(11) **EP 3 996 052 B1**
(45) Date of publication and mention of the grant of the patent: **08.05.2024**
(21) Application number: 20835662.6
(22) Date of filing: 24.06.2020
(51) Int. Cl.: G06T 19/00, H04N 5/222, G06F 3/0346, G06F 3/01

(54) **INFORMATION PROCESSING SYSTEM, INFORMATION PROCESSING METHOD, AND PROGRAM**
INFORMATIONSVERARBEITUNGSSYSTEM, INFORMATIONSVERARBEITUNGSVERFAHREN UND PROGRAMM
SYSTÈME DE TRAITEMENT D'INFORMATIONS, PROCÉDÉ DE TRAITEMENT D'INFORMATIONS, ET PROGRAMME

(30) Priority: 02.07.2019 JP 2019123863
(43) Date of publication of application: 11.05.2022
(73) Proprietor: Sony Group Corporation, Tokyo 108-0075 (JP)
(72) Inventor: KATO, Takaaki, Tokyo 108-0075 (JP); ESHIMA, Masashi, Tokyo 108-0075 (JP)
(74) Representative: MFG Patentanwälte Meyer-Wildhagen Meggle-Freund Gerhard PartG mbB
(86) International application number: PCT/JP2020/024801
(87) International publication number: WO 2021/002256

(56) References cited:
- JP-A- 2019 029 721
- JP-A- 2019 067 195
- JP-A- 2019 211 864
- US-A1- 2014 378 222
- US-A1- 2017 193 666
- US-B2- 9 070 402

## Description

### Field

The present disclosure relates to an information processing system, an information processing method, and a program.

### Background

Conventionally, there has been developed a technique of arranging a virtual camera (hereinafter, referred to as a virtual camera) in a three-dimensional virtual space created by computer graphics (CG) and generating a CG video as if the virtual space is imaged by the virtual camera.

In recent years, there has also been developed a technique of controlling the position and posture of a virtual camera arranged in a virtual space in accordance with the movement of a user himself/herself or a device (a camera or the like) held by the user by using a technique, such as motion capture, of detecting the movement of a person.

Patent Literature 4, published as US 2014 / 378222 A1, discloses a virtual cinematography system (SmartVCS), including a mobile tablet device, wherein the mobile tablet device includes a touch-sensor screen, a first hand control, a second hand control, and a motion sensor. The SmartVCS including a motion tracking camera configured to track the movements of the motion sensor and generate motion tracking information and a computer operatively coupled to the motion tracking camera configured to receive the motion tracking information and to transmit the motion tracking information to the first mobile tablet device, wherein the first mobile device is configured to overlay the motion tracking information onto a virtual landscape.

Patent Literature 5, published as US 2017 / 193666 A1, discloses methods and apparatus for capturing motion from a self-tracking device. In embodiments, a device self-tracks motion of the device relative to a first reference frame while recording motion of a subject relative to a second reference frame, the second reference frame being a reference frame relative to the device. In the embodiments, the subject may be a real object or, alternately, the subject may be a virtual subject and a motion of the virtual object may be recorded relative to the second reference frame by associating a position offset relative to the device with the position of the virtual object in the recorded motion. The motion of the subject relative to the first reference frame may be determined from the tracked motion of the device relative to the first frame and the recorded motion of the subject relative to the second reference frame.

Patent Literature 6, published as US 9 070 402 B2, discloses an interactive 3D presentation system that utilizes a collection of shots or motion views where each shot can include a combination of a camera view and camera action. A visual transition, such as a fade, can be presented at the end and beginning of sequential shots. Between the end point of a first shot and the beginning of a sequential shot, the scene is not shown. The system allows interactive authoring and/or viewing a 3D visual experience composed by defining a collection of shots where each shot is a combination of a camera view point of interest (POI) plus a camera motion path. The POI is placed on the path in a variety of ways where it can be at the beginning, in the middle or at the end of the path. A collection of predefined, cinematically styled camera motion paths, such as a crane and track shots, can be made available to the author. The pacing and duration of each shot can be adjusted. A graphical user interface showing the scene is provided and includes thumbnails of the POI or sets of POIs where the user can select a thumbnail to play an associated shot or set. The interface allows for the arrangement and ordering of shots to be used in a presentation. The system allows a shot to be retrieved from a collection of shots by indexing the 3D locations of each shot's camera path and using this index to find the nearest neighbors to a user specified mouse cursor position. Variations in the scene can also be selected using the interface.

### Citation List

### Patent Literature

Patent Literature 1: JP 2015-521419 W
Patent Literature 2: JP 2014-507723 W
Patent Literature 3: JP 2017-58752 A
Patent Literature 4: US 2014/0378222 A1
Patent Literature 5: US 2017/0193666 A1
Patent Literature 6: US 9 070 402 B2

### Summary

### Technical Problem

Here, in order to accurately control the virtual camera arranged in the virtual space, it is necessary to correctly align (alignment) the position and posture of the user and the device in a real space with the position and posture of the virtual camera in the virtual space. When there is a deviation in the alignment, the user cannot accurately manipulate the virtual camera in the virtual space, which causes a problem that it is difficult to generate a desired CG video.

In this regard, the present disclosure proposes an information processing system, an information processing method, and a program that enable generation of a CG video desired by a user. Solution to Problem

According to a first aspect the present invention provides an information processing device in accordance with independent claim 1. According to a second aspect the present invention provides a computer implemented information processing method in accordance with independent claim 12. According to a third aspect the present invention provides a program in accordance with claim 14. Further aspects are set forth in the dependent claims, the drawings, and the description below.

To solve the above-described problem, an information processing system according to one aspect of the present disclosure comprises: an acquisition unit that acquires first position information of a device existing in a real space, the first position information regarding the real space; a trajectory generation unit that generates a movement trajectory of a viewpoint set in a virtual space on a basis of the first position information, the movement trajectory regarding the virtual space; a first modification unit that modifies second position information of the viewpoint in the virtual space, the second position information regarding the virtual space; a correction unit that corrects the movement trajectory on a basis of the modification of the second position information; and a trajectory storage unit that is configured to store second position information of the viewpoint in the virtual space along a time series to hold the movement trajectory, wherein the correction unit is configured to correct the movement trajectory held in the trajectory storage unit.

### Brief Description of Drawings

FIG. 1 is a diagram for describing an outline of a virtual camera system of an Outside-in method according to a first embodiment.
FIG. 2 is a diagram for describing an outline of a virtual camera system of an Inside-out method according to the first embodiment.
FIG. 3 is a diagram for describing deviation of a trajectory occurring in the virtual camera system of the Inside-out method.
FIG. 4 is a block diagram illustrating a schematic configuration example of the virtual camera system according to the first embodiment.
FIG. 5 is a schematic diagram illustrating a schematic configuration example of a back side of the device according to the first embodiment.
FIG. 6 is a diagram illustrating an example of a trajectory data table stored in a trajectory data storage unit according to the first embodiment.
FIG. 7 is a flowchart illustrating an example of a basic operation according to the first embodiment.
FIG. 8 is a flowchart illustrating an example of an anchor registration operation and a trajectory correction operation according to the first embodiment.
FIG. 9 is a schematic diagram for describing a flow in correcting the trajectory data table on the basis of the self-position of the virtual camera after modification according to the first embodiment (part 1).
FIG. 10 is a schematic diagram for describing the flow in correcting the trajectory data table on the basis of the self-position of the virtual camera after modification according to the first embodiment (part 2).
FIG. 11 is a block diagram illustrating a schematic configuration example of a virtual camera system according to a second embodiment.
FIG. 12 is a diagram illustrating an example of a correlation table according to the second embodiment.
FIG. 13 is a flowchart illustrating an example of a control value calculation operation according to the second embodiment.
FIG. 14 is a diagram for describing movement of a virtual camera across different virtual spaces according to a third embodiment.
FIG. 15 is a diagram illustrating an example of a trajectory data table stored in a trajectory data storage unit according to the third embodiment.
FIG. 16 is a schematic diagram illustrating a schematic configuration example of a back side of a device according to the third embodiment.
FIG. 17 is a diagram for describing movement of a virtual camera when a scale of a coordinate system according to a modification of the third embodiment is changed.
FIG. 18 is a schematic diagram illustrating a schematic configuration example of a back side of a device according to the modification of the third embodiment.
FIG. 19 is a block diagram illustrating a hardware configuration of a server according to an embodiment of the present disclosure. Description of Embodiments

Hereinafter, one embodiment of the present disclosure will be described in detail on the basis of the drawings. Incidentally, in the following embodiment, the same reference signs are given to the same portions, and redundant description will be omitted.

The present disclosure will be described according to the order of items described below.
1. Virtual camera system
2. First embodiment
2.1 Schematic configuration example of virtual camera
2.2 Schematic configuration example of device
2.3 Schematic configuration example of trajectory data table
2.4 Operation example
2.4.1 Basic Flow
2.4.2 Anchor registration and trajectory correction flow
2.4.3 Specific example of trajectory correction
2.5 Action and effect
3. Second embodiment
3.1 Schematic configuration example of virtual camera
3.2 Operation example
3.2.1 Control value calculation flow
3.3 Action and effect
4. Third embodiment
4.1 Schematic configuration example of trajectory data table
4.2 Schematic configuration example of device
4.3 Action and effect
4.4 Modification
5. Hardware Configuration

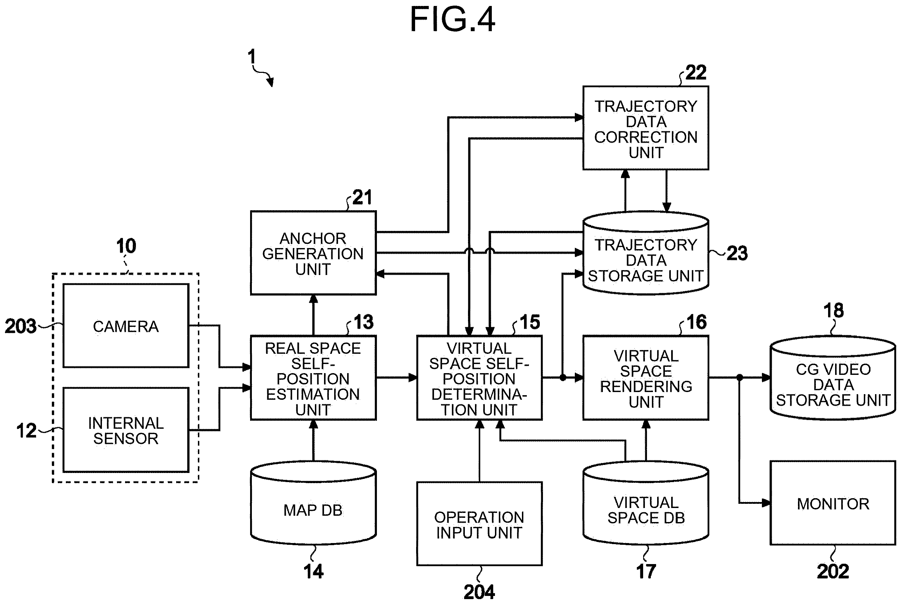

The invention as claimed is best understood in light of the First embodiment referred-to above, in particular as described in the context of Figure 4. The Second and Third embodiments are further improvements on this First embodiment.

### 1. Virtual camera system

First, an outline of a virtual camera according to the present disclosure will be described. As described above, the virtual camera is a virtual camera arranged in a virtual space created by CG. By rendering the virtual space within the angle of view of the virtual camera with the position of the virtual camera as a viewpoint, it is possible to generate a CG video as if the virtual space is imaged by the camera.

As a method of manipulating the virtual camera, for example, there are an Outside-in method and an Inside-out method.

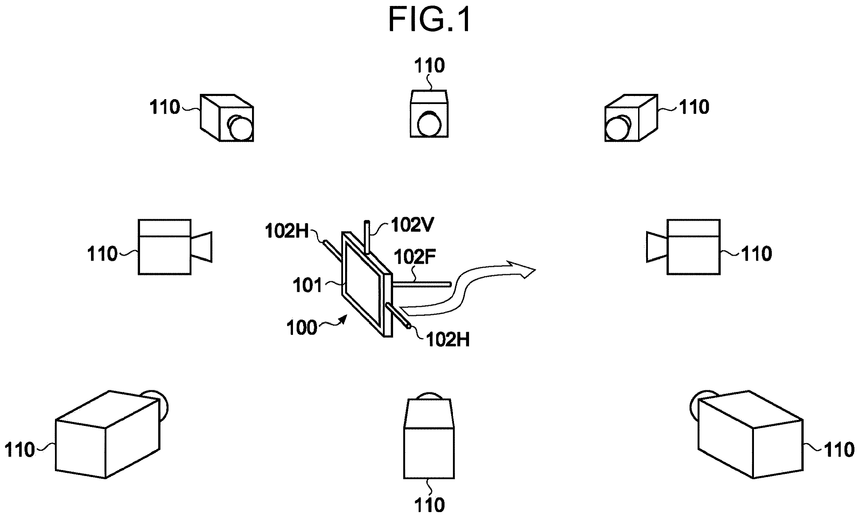

FIG. 1 is a diagram for describing an outline of a virtual camera system of the Outside-in method. As illustrated in FIG. 1, in the Outside-in method, for example, a device 100 arranged in a real space is imaged by a plurality of external cameras 110, and the image is analyzed so that the three-dimensional position of the device 100 in the real space is specified.

The device 100 is provided with, for example, direction sticks 102H, 102V, and 102F for clearly indicating the posture of the device 100. The direction stick 102H indicates the lateral direction of the device 100, the direction stick 102V indicates the longitudinal direction of the device 100, and the direction stick 102F indicates the front direction of the device 100. In a case where the device 100 is regarded as a camera, the direction stick 102F indicates the angle of view direction of the camera. Therefore, the posture of the device 100 can be specified by analyzing the image captured by the external camera 110. Incidentally, the posture may be the inclination or direction of the device determined by a yaw angle, a roll angle, and a pitch angle.

As described above, in the Outside-in method, the position and posture of the device 100 in the real space are specified by using the external camera 110 which images the device 100 from the outside.

The virtual camera in the virtual space is linked so as to move in accordance with the movement of the device 100 in the real space. Therefore, in a case where the user moves the device 100 or changes the direction thereof, the position and posture of the virtual camera in the virtual space change in accordance with the movement of the device 100. Therefore, the user can manipulate the device 100 to generate a CG video of a desired angle from a desired position in the virtual space. Incidentally, the device 100 may be provided with a monitor 101 for presenting the video captured by the virtual camera to the user in real time.

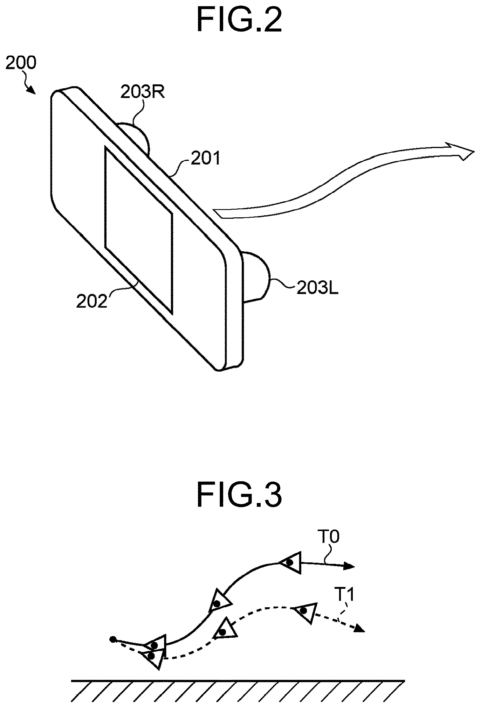

On the other hand, FIG. 2 is a diagram for describing an outline of a virtual camera system of the Inside-out method. In the Inside-out method, a device 200 estimates the position and posture by simultaneous localization and mapping (SLAM), for example. For example, the device 200 includes cameras 203L and 203R on the front surface of a housing 201 of the device, and specifies its own current position and its own current posture on a map (also referred to as a preliminary map) created in advance on the basis of images captured by the cameras 203L and 203R. Incidentally, the device 200 may create and update the map in real time on the basis of the images captured by the cameras 203L and 203R and information acquired by various sensors.

Similarly to the Outside-in method, the virtual camera in the virtual space is linked to the device 200, and the position and posture of the virtual camera in the virtual space can be changed by the user moving the device 200 or the like. Therefore, the user can manipulate the device 200 to generate a CG video of a desired angle from a desired position in the virtual space. Incidentally, the device 200 may be provided with a monitor 202 for presenting the video captured by the virtual camera to the user in real time.

In the SLAM adopted in the Inside-out method, the position and posture of the device 200 may be estimated using a global positioning system (GPS), an inertial measurement unit (IMU), various distance measuring sensors, or the like instead of the cameras 203L and 203R or in addition to the cameras 203L and 203R.

In the virtual camera system as described above, in order to accurately reproduce camerawork desired by the user with the virtual camera, it is necessary to correctly adjust alignment between the position and posture of the device 100/200 in the real space and the position and posture of the virtual camera in the virtual space.

However, there is a case where a deviation occurs in the middle of use even when the alignment between the device 100/200 and the virtual camera is correctly adjusted.

For example, in the Outside-in method, in a case where device 100 is moved from a room in which a system including a certain plurality of external cameras 110 is installed to a room in which a system including another plurality of external cameras 110 is installed, when the alignment of these two coordinate systems is deviated, there is a possibility that the virtual camera behaves unintentionally when moving from one system to the other system and a desired CG video cannot be obtained.

In the Inside-out method adopting SLAM, the position and posture of the device 200 are values obtained by stacking the estimation values thereof. Therefore, for example, in a case where there is a deviation in the initial alignment or a deviation occurs in the process of stacking the estimation values, the user cannot accurately manipulate the virtual camera in the virtual space.

For example, as in the example illustrated in FIG. 3, in a case where the initial direction of the device 200 is downward from the initial setting value when the coordinate system of the device 200 is set, a trajectory T1 of the virtual camera is obtained by rotating a trajectory T0 of the actual device 200 in a pitch direction. As a result, a deviation occurs between the manipulation of the device 200 and the camerawork of the virtual camera, and there occurs a problem that a CG video desired by the user cannot be obtained.

In this regard, in the following embodiments, an information processing system, an information processing method, and a program that enable generation of a CG video desired by a user by modifying a deviation in position and posture generated between a device in a real space and a virtual camera in a virtual space will be described with some examples.

### 2. First embodiment

First, an information processing system, an information processing method, and a program according to a first embodiment will be described in detail with reference to the drawings. Incidentally, in this embodiment, the virtual camera system of the Inside-out method described above will be exemplified.

### 2.1 Schematic configuration example of virtual camera

FIG. 4 is a block diagram illustrating a schematic configuration example of a virtual camera system as the information processing system according to the first embodiment. As illustrated in FIG. 4, a virtual camera system 1 includes a sensor group 10 including a camera 11 and a real space self-position estimation unit (also referred to as an estimation unit or a second modification unit) (alternatively may configure a part of an acquisition unit) 13, a map database (DB) 14, a virtual space self-position determination unit (also referred to as a trajectory generation unit, a first modification unit, or a determination unit) 15, a virtual space rendering unit 16, a virtual space DB 17, a CG video data storage unit 18, a monitor 202, an operation input unit 204, an anchor generation unit 21, a trajectory data correction unit (also referred to as a correction unit) 22, and a trajectory data storage unit (also referred to as a trajectory storage unit) 23. a camera 203 corresponds to, for example, the cameras 203L and 203R used in the Inside-out method.

The sensor group 10 is, for example, a set of sensors that acquires various types of information for estimating the self-position of the device 200 in the real space. The sensor group 10 includes the camera 11 as an external sensor for acquiring information (external information) around the device 200. As the camera 11, various image sensors such as a so-called RGB camera and an RGB-D camera can be used. Further, additionally, as the external sensor, a time-of-flight (ToF) sensor, a light detection and ranging (LIDAR) sensor, a GPS sensor, a magnetic sensor, a radio field intensity sensor, or the like can be used.

The sensor group 10 may also include an internal sensor for acquiring information such as the movement distance, movement speed, movement direction, or posture of the device 200. As the internal sensor, an IMU, an acceleration sensor, an angular velocity sensor, or the like can be used. Further, in a case where a drive system such as an actuator for self-traveling is mounted on the device 200, an encoder, a potentiometer, or the like can be used as the internal sensor.

The map database (DB) 14 stores map data created in advance. Incidentally, the map in the map DB 14 may be appropriately updated on the basis of the external information and/or the internal information acquired by the sensor group 10.

The real space self-position estimation unit 13 reads the map from the map DB 14, and estimates and specifies the coordinates (x, y, z) and the posture (Φ, θ, ψ) on the map of the device 200 on the basis of the external information and/or the internal information input from the sensor group 10. In this description, the position and posture of the device 200 on the map estimated by the real space self-position estimation unit 13 are referred to as a self-position Tr.

The virtual space self-position determination unit 15 determines a self-position Tv of the virtual camera in the virtual space on the basis of the self-position Tr of the device 200 input from the real space self-position estimation unit 13. However, the present invention is not limited thereto, and the virtual space self-position determination unit 15 may determine the self-position Tv of the virtual camera in the virtual space on the basis of the movement distance, the direction, and the like of the device 200 input from the real space self-position estimation unit 13.

Incidentally, the virtual camera in this description is a viewpoint set in the virtual space. This viewpoint may be a point or a planar or stereoscopic area.

The self-position Tv determined by the virtual space self-position determination unit 15 is registered in the trajectory data storage unit 23 together with time information (for example, an elapsed time to be described later) when the self-position Tv is determined. Therefore, the trajectory data storage unit 23 stores a movement trajectory along the time series of the virtual camera in the virtual space. Incidentally, in this description, a position on the trajectory indicated by the self-position Tv is referred to as a node.

The virtual space DB 17 stores a coordinate system of a virtual space created by CG, object data of an object arranged in the virtual space, and the like.

The self-position Tv determined by the virtual space self-position determination unit 15 is also input to the virtual space rendering unit 16. The virtual space rendering unit 16 reproduces a virtual space by acquiring the coordinate system of the virtual space, the object data, and the like from the virtual space DB 17. Then, the virtual space rendering unit 16 renders the reproduced virtual space with the self-position Tv of the virtual camera input from the virtual space self-position determination unit 15 as a viewpoint, thereby generating a CG video within the angle of view of the virtual camera. The CG video may include, for example, a key frame (also referred to as an I frame), a difference frame (also referred to as P frame and B frame), and the like.

The CG video generated by the virtual space rendering unit 16 is input to and accumulated in the CG video data storage unit 18. Further, the CG video is input to the monitor 202 mounted on the device 200 and presented to the user in real time. Therefore, the user can check the CG video currently captured in the virtual space by viewing the CG video reproduced on the monitor 202.

Incidentally, in a case where an audio source is set in the virtual space, a virtual microphone may be added to the virtual camera. In this case, the CG video generated by the virtual space rendering unit 16 may include audio data.

The operation input unit 204 is a user interface for the user to input various instructions. In a case where a touch panel is superimposed on the monitor 202, the operation input unit 204 may be the touch panel. In this case, various buttons for input support and the like may be displayed on the monitor 202. Alternatively, the operation input unit 204 may be a key (including a cross key or the like), a button, an analog stick, or the like provided in the housing 201 of the device 200.

The user can give an instruction to start or end a link between the device 200 and the virtual camera, for example, by operating the operation input unit 204. Further, by operating the operation input unit 204, the user can give an instruction to start or end capturing of a CG video by the virtual camera, for example.

In addition, by operating the operation input unit 204, for example, the user can modify the position and posture of the virtual camera in the virtual space, that is, the self-position Tv of the virtual camera, regardless of the position and posture of the device 200.

The user can instruct registration of an anchor to be described later, for example, by operating the operation input unit 204.

For example, the user can input an instruction to change the position of the virtual camera by operating a cross key 204a. Further, the user can input an instruction to change the direction of the virtual camera by operating an analog stick 204b.

The instruction input from the cross key 204a and the analog stick 204b, that is, the control value is input to the virtual space self-position determination unit 15. The virtual space self-position determination unit 15 adjusts the self-position Tv of the virtual camera in the virtual space on the basis of the input control value, and inputs the adjusted self-position Tv to the virtual space rendering unit 16. The virtual space rendering unit 16 generates a CG video on the basis of the input self-position Tv, and displays the CG video on the monitor 202.

Incidentally, in the process in which the user changes the position and posture (self-position Tv) of the virtual camera using the operation input unit 204, the CG video from the viewpoint of the self-position Tv during the movement of the virtual camera may be displayed on the monitor 202.

Then, when it is determined from the CG video projected on the monitor 202 that the virtual camera has moved to a desired position and posture, the user presses an anchor registration button 204c.

The anchor generation unit 21 associates coordinates on the real space with coordinates on the virtual space. Specifically, when the user gives an instruction to register an anchor via the operation input unit 204, the anchor generation unit 21 associates the self-position Tr estimated by the real space self-position estimation unit 13 when the instruction is input with the self-position Tv determined by the virtual space self-position determination unit 15. Incidentally, in this embodiment, the self-position Tv of the virtual camera on the virtual space when the user inputs an anchor registration instruction via the operation input unit 204 is referred to as an anchor.

The trajectory data correction unit 22 corrects the trajectory data table of the virtual camera stored in the trajectory data storage unit 23, for example, on the basis of the instruction input by the user to the operation input unit 204

Specifically, in a case where the user instructs to register an anchor after modifying the self-position Tv of the virtual camera by using the operation input unit 204, the trajectory data correction unit 22 modifies coordinates of a node set on a trajectory connecting a previously registered anchor (may be the self-position Tv at a time point of starting the link between the device 200 and the virtual camera or a time point of starting imaging by the virtual camera) and a currently registered anchor in the trajectory data table stored in the trajectory data storage unit 23.

For example, the trajectory data correction unit 22 modifies the coordinates of the node set on the trajectory connecting the previously registered anchor and the currently registered anchor by rotating and/or translating the trajectory based on the self-position Tv (more specifically, the self-position Tv determined by the virtual space self-position determination unit 15 on the basis of the self-position Tr estimated by the real space self-position estimation unit 13) determined by the virtual space self-position determination unit 15 from the previous registration of the anchor to the current registration of the anchor with the self-position Tv of the previously registered anchor as a base point on the basis of the movement amount and the movement direction of the position and/or posture of the virtual camera input by the user to the operation input unit 204. At that time, the posture of the virtual camera with respect to the posture of the device 200 may be modified on the basis of the movement amount and the movement direction of the position and/or the posture of the virtual camera input by the user to the operation input unit 204.

Incidentally, the posture of the virtual camera in this description may be the direction and inclination (a yaw angle, a roll angle, and an inclination in a pitch angle direction) of the viewpoint (or angle of view).

As a result, the trajectory of the virtual camera caused by the deviation in the alignment between the device 200 and the virtual camera is modified, and thus it is possible to generate the CG video desired by the user.

In the above-described configuration, the sensor group 10 other than the camera 11 and the monitor 202 are mounted on, for example, the device 200. The sensor group 10 other than the camera 11 and the configuration other than the monitor 202, that is, an external sensors and the internal sensors 12 other than the camera 11, the real space self-position estimation unit 13, the map database (DB) 14, the virtual space self-position determination unit 15, the virtual space rendering unit 16, the virtual space DB 17, the CG video data storage unit 18, the monitor 202, the operation input unit 204, the anchor generation unit 21, the trajectory data correction unit 22, and the trajectory data storage unit 23 may be mounted on the device 200, or may be arranged in a server (including various servers such as a cloud server) connected to the device 200 so as to be able to communicate with the device in a wired or wireless manner.

### 2.2 Schematic configuration example of device

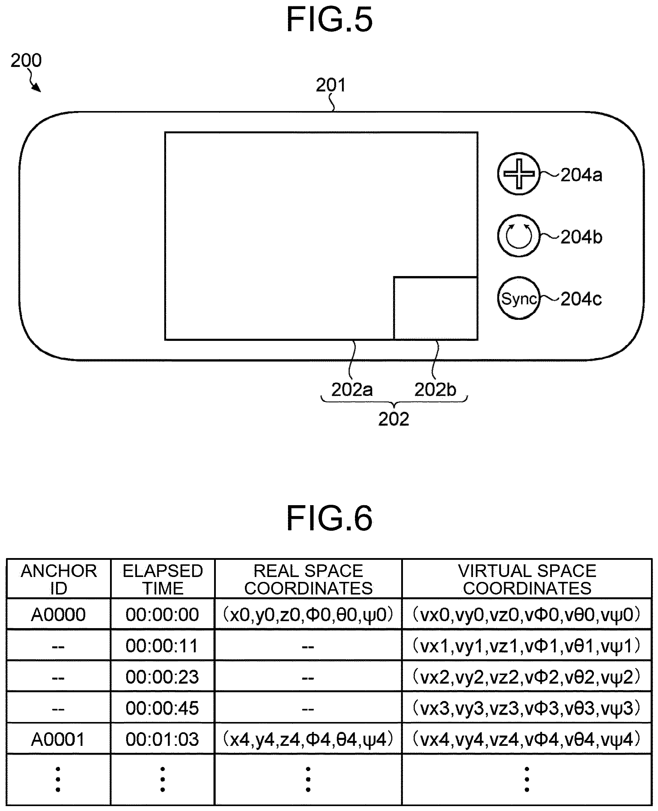

FIG. 5 is a schematic diagram illustrating a schematic configuration example of a back side (that is, a user side) of the device according to the first embodiment. As illustrated in FIG. 5, on the back side of the housing 201 of the device 200, for example, the cross key 204a, the analog stick 204b, and the anchor registration button 204c as the operation input unit 204 are provided in addition to the monitor 202 described above.

The cross key 204a is, for example, the operation input unit 204 for inputting an instruction to move the virtual camera upward, downward, leftward, and rightward in the virtual space. The analog stick 204b is, for example, a knob that rotates in an arrow direction, and is the operation input unit 204 for inputting an instruction to rotate the direction of the virtual camera in the virtual space. The anchor registration button 204c is, for example, the operation input unit 204 for inputting an instruction to register the current self-position Tv of the virtual camera as an anchor.

Therefore, for example, when it is determined from the CG video checked on the monitor 202 that the position of the virtual camera is deviated from the desired position, the user operates the cross key 204a to move the virtual camera to the desired position in the virtual space. Further, for example, when it is determined from the CG video checked on the monitor 202 that the posture of the virtual camera is deviated from the desired posture, the user adjusts the posture of the virtual camera by operating the analog stick 204b.

The monitor 202 may be divided into, for example, a main area 202a and a sub area 202b. In the main area 202a, for example, the CG video generated by the virtual space rendering unit 16 is displayed.

On the other hand, in the sub area 202b, for example, information supporting imaging in the virtual space by the user may be displayed. For example, various types of information such as a two-dimensional or three-dimensional map of the virtual space centered on the virtual camera, a trajectory of the virtual camera in the virtual space and a position of an anchor on the trajectory, and an image obtained by imaging the inside of the real space in advance may be displayed in the sub area 202b. These pieces of information may be generated by the virtual space rendering unit 16 or may be registered in the virtual space DB 17 in advance.

Incidentally, the device 200 according to this embodiment may be a device that moves by being carried by the user, a device that moves by being remotely operated by the user, or a device that moves autonomously. Further, in the case of a remote moving type or an autonomous moving type, the device 200 may be a traveling type that travels on the ground, may be a ship type or a diving type that travels on a water surface or under water, or may be a flying type that flies in the air.

### 2.3 Schematic configuration example of trajectory data table

FIG. 6 is a diagram illustrating an example of a trajectory data table stored in a trajectory data storage unit according to the first embodiment. Incidentally, in the following description, an anchor is also treated as one of nodes on the trajectory.

As illustrated in FIG. 6, the trajectory data table in the trajectory data storage unit 23 includes node data in which coordinates (hereinafter, referred to as virtual space coordinates) indicating the self-position Tv of the virtual camera in the virtual space are associated with an elapsed time (for example, the elapsed time from the start of imaging) when the virtual space self-position determination unit 15 determines the self-position Tv. Incidentally, the virtual space coordinates include the position (vx, vy, vz) of the virtual camera in the virtual space and information regarding the posture of the virtual camera, for example, coordinates (vφ, vθ, vψ) indicating a yaw angle vφ, a roll angle vθ, and a pitch angle vψ of the virtual camera.

The trajectory data table also includes node data (hereinafter, also referred to as anchor data) related to the anchor. In the anchor data, in addition to the self-position Tv and the elapsed time when the self-position Tv is determined, an anchor ID for uniquely identifying the anchor and the self-position Tr of the device 200 used to determine the self-position Tv are associated with each other.

Therefore, by sequentially inputting each node data of the trajectory data table to the virtual space self-position determination unit 15 according to the elapsed time, the virtual space rendering unit 16 can be caused to generate a CG video when the virtual camera is moved along the trajectory indicated by the trajectory data table.

### 2.4 Operation example

Next, an operation of the virtual camera system according to the first embodiment will be described in detail with reference to the drawings.

### 2.4.1 Basic Flow

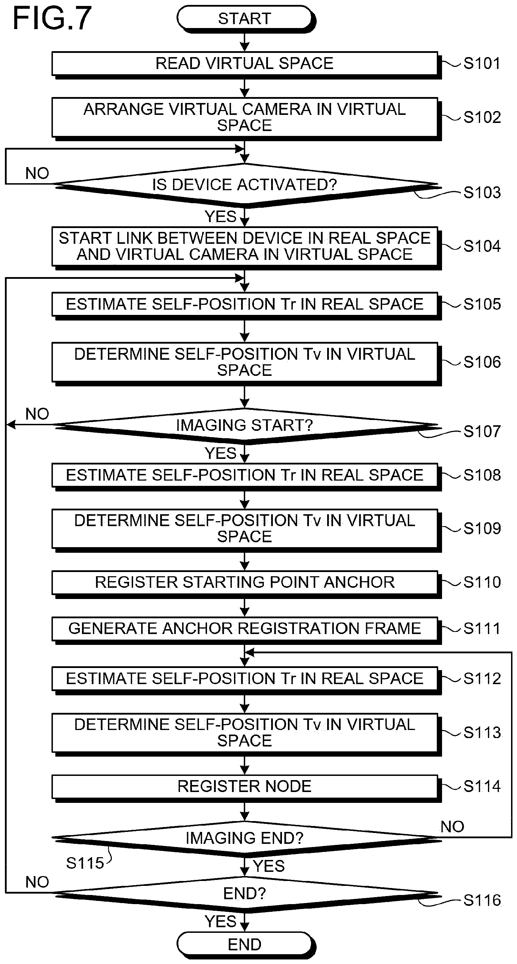

First, a basic operation of the virtual camera system according to the first embodiment will be described. FIG. 7 is a flowchart illustrating an example of the basic operation according to the first embodiment. Incidentally, in the following description, it is assumed that the virtual camera continuously executes generation of a CG video, for example, generation of a key frame (also referred to as an I frame), a difference frame (also referred to as a P frame and a B frame), or the like from the start to the end of imaging.

As illustrated in FIG. 7, when the virtual camera system is activated, first, the virtual space self-position determination unit 15 reads a coordinate system (hereinafter, referred to as a CG coordinate system) of the virtual space in which the virtual camera is arranged from the virtual space DB 17, and the virtual space rendering unit 16 reads a field and an object of the virtual space in which the virtual camera is arranged from the virtual space DB 17 (Step S101). Incidentally, the virtual space model to be symmetric for reading may be appropriately selected by the user.

Next, the virtual space self-position determination unit 15 determines a predetermined position of the read CG coordinate system as the self-position Tv of the virtual camera, thereby arranging the virtual camera in the virtual space (Step S102).

Next, the processing waits until the device 200 is activated by the user (NO in Step S103), and when the device 200 is activated (YES in Step S103), the virtual space self-position determination unit 15 starts a link between the device 200 and the virtual camera (Step S104). Specifically, the virtual space self-position determination unit 15 starts changing the self-position Tv of the virtual camera in conjunction with the change in the self-position Tr of the device 200 input from the real space self-position estimation unit 13.

When the device 200 is activated (Step S103), the real space self-position estimation unit 13 estimates the self-position Tr of the device 200 in the real space on the basis of the external information and/or the internal information input from the sensor group 10 and the map stored in the map DB 14 (Step S105). Then, the virtual space self-position determination unit 15 determines the self-position Tv of the virtual camera in the virtual space on the basis of the self-position Tr estimated by the real space self-position estimation unit 13 (Step S106). As a result, the position and posture (self-position Tv) of the virtual camera in the virtual space change in conjunction with the position and posture (self-position Tr) of the device 200 in the real space.

The operations in Steps S105 and S106 are continued until an instruction to start imaging is input from the operation input unit 204 of the device 200 (NO in Step S107).

When the user inputs the instruction to start imaging from the operation input unit 204 (YES in Step S107), first, an anchor (hereinafter, referred to as a starting point anchor) corresponding to an imaging start position is generated. Specifically, for example, first, the real space self-position estimation unit 13 estimates the self-position Tr of the device 200 in the real space on the basis of the external information and/or the internal information input from the sensor group 10 and the map stored in the map DB 14 (Step S108), and the virtual space self-position determination unit 15 determines the self-position Tv of the virtual camera in the virtual space on the basis of the self-position Tr estimated by the real space self-position estimation unit 13 (Step S109). Then, the anchor generation unit 21 generates an anchor ID for uniquely identifying the starting point anchor, associates the anchor ID with the self-position Tr estimated by the real space self-position estimation unit 13, the self-position Tv determined by the virtual space self-position determination unit 15, and the elapsed time from the imaging start, thereby generating anchor data of the starting point anchor, and registers the anchor data of the starting point anchor in the trajectory data storage unit 23 (Step S110).

Next, the virtual space rendering unit 16 generates frame data (hereinafter, referred to as an anchor corresponding frame) corresponding to the starting point anchor by rendering the self-position Tv of the virtual camera at the time of registering the starting point anchor as a viewpoint, and stores the generated anchor corresponding frame in, for example, the CG video data storage unit 18 (Step Sill). The anchor corresponding frame can be used as a key frame, for example, in generation of a CG video.

Subsequently, until the user instructs the end of the imaging from the operation input unit 204, the estimation (Step S112) of the self-position Tr by the real space self-position estimation unit 13, the self-position Tv (Step S113) by the virtual space self-position determination unit 15, and the registration (Step S114) of the node data in which the self-position Tv and the elapsed time are associated with each other in the trajectory data storage unit 23 are repeatedly executed (NO in Step S115). As a result, the trajectory of the virtual camera during the imaging period is stored in the trajectory data storage unit 23.

Thereafter, when the user inputs an instruction to end the imaging from the operation input unit 204 (YES in Step S115), it is determined whether or not to end this operation (Step S116), and in a case where this operation is ended (YES in Step S116), this operation is ended. On the other hand, in a case where this operation is not ended (NO in Step S116), this operation returns to Step S105, and the subsequent operations are executed.

### 2.4.2 Anchor registration and trajectory correction flow

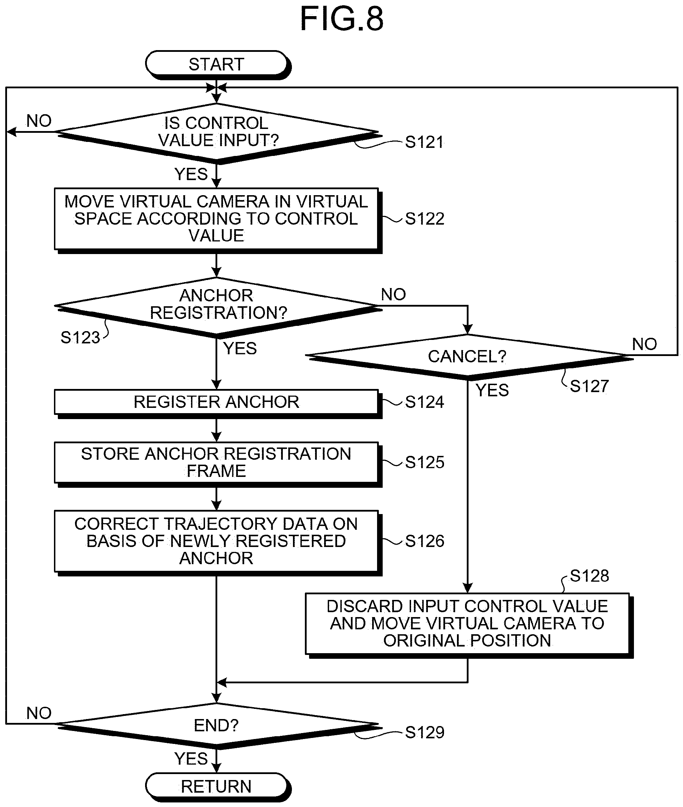

Next, an anchor registration operation and a trajectory correction operation executed during the basic operation described with reference to FIG. 7 will be described. FIG. 8 is a flowchart illustrating an example of the anchor registration operation and the trajectory correction operation according to the first embodiment. Incidentally, the operation illustrated in FIG. 8 may be executed in parallel with the basic operation illustrated in FIG. 7, for example, after imaging by the virtual camera is started.

As illustrated in FIG. 8, in this operation, first, the processing waits until a control value for modifying the self-position Tv of the virtual camera is input from the operation input unit 204 of the device 200 (NO in Step S121). Incidentally, the control value may include, for example, a control value (Δvx, Δvy, Δvz) for CG coordinates (vx, vy, vz) of the virtual camera represented by an x axis, a y axis, and a z axis, and a control value (Δvφ, Δvθ, Δvψ) for a posture (vφ, vθ, vψ) of the virtual camera represented by a yaw angle vφ, a roll angle vθ, and a pitch angle vψ.

When the control value is input (YES in Step S121), the virtual space self-position determination unit 15 modifies the self-position Tv of the virtual camera according to the input control value to move the virtual camera in the virtual space (Step S122). As a result, the position of the viewpoint and the direction of the angle of view at the time of rendering the CG video change.

Next, the virtual space self-position determination unit 15 determines whether or not the anchor registration button 204c in the operation input unit 204 is pressed (Step S123), and in a case where the anchor is pressed (YES in Step S123), the anchor generation unit 21 generates an anchor ID for uniquely identifying the anchor, associates the anchor ID, the current self-position Tr of the device 200 estimated by the real space self-position estimation unit 13, the current self-position Tv of the virtual camera determined by the virtual space self-position determination unit 15, and the elapsed time from the start of imaging, thereby generating anchor data of the anchor, and registers the anchor data of the anchor in the trajectory data storage unit 23 (Step S124).

Next, the virtual space rendering unit 16 generates an anchor corresponding frame of the registered anchor by rendering the self-position Tv of the virtual camera at the time of anchor registration as a viewpoint, and stores the generated anchor corresponding frame in, for example, the CG video data storage unit 18 (Step S125). The anchor corresponding frame can be also used as a key frame, for example, in generation of a CG video.

The trajectory data correction unit 22 corrects the trajectory data table stored in the trajectory data storage unit 23 on the basis of the newly registered anchor (Step S126), and the processing proceeds to Step S129. For example, the trajectory data correction unit 22 corrects a trajectory data table of a section (not including the first anchor) divided by a previous anchor (referred to as a first anchor) and an anchor (referred to as a second anchor) immediately before the anchor by rotating and/or expanding and contracting the trajectory data table of the section on the basis of the control value with the first anchor as a base point.

On the other hand, in a case where it is determined in Step S123 that the anchor registration button 204c in the operation input unit 204 is not pressed (NO in Step S123), the virtual space self-position determination unit 15 determines whether or not the control value input in Step S121 is canceled (Step S127). Incidentally, the user may input the cancellation of the control value via the operation input unit 204, for example.

In a case where the control value is not canceled (NO in Step S127), the virtual space self-position determination unit 15 returns to Step S121 and executes subsequent operations. On the other hand, in a case where the control value is canceled (YES in Step S127), the virtual space self-position determination unit 15 discards the control value input in Step S121 and moves the virtual camera to the original position, that is, returns the self-position Tv of the virtual camera to the original value (Step S128), and the processing proceeds to Step S129.

In Step S129, it is determined whether or not to end this operation, and in a case where this operation is ended (YES in Step S129), this operation is ended. On the other hand, when this operation is not ended (NO in Step S129), this operation returns to Step S121, and the subsequent operations are executed.

### 2.4.3 Specific example of trajectory correction

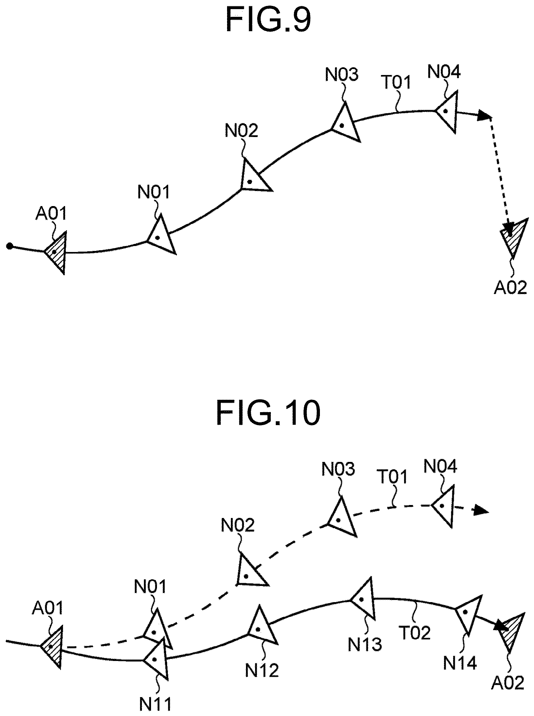

FIGS. 9 and 10 are schematic diagrams for describing a flow in correcting the trajectory data table on the basis of the modified self-position of the virtual camera. FIG. 9 illustrates a case where four nodes N01 to N04 are generated in the process of the virtual camera moving from the position corresponding to a first anchor A01.

As illustrated in FIG. 9, when the user operates the operation input unit 204 to modify the self-position Tv of the virtual camera and registers the modified self-position Tv as the first anchor A01, the tip position of the trajectory T01 and the position of a second anchor A02 deviate from each other.

In this case, as illustrated in FIG. 10, the trajectory data correction unit 22 rotates and/or expands/contracts the trajectory T01 after the first anchor A01 on the basis of the control value with the first anchor A01 as a base point such that the tip of the trajectory T01 coincides with the first anchor A01. Specifically, the node data of the nodes N01 to N04 between the first anchor A01 and the second anchor A02 is corrected on the basis of the distance from the first anchor A01 to the second anchor A02, the distance from the first anchor A01 to the nodes N01 to N04, and the control value. As a result, the trajectory T01 is corrected to a trajectory T02 having a tip coincides with the first anchor A01.

The CG video when the virtual camera is moved along the corrected trajectory may be automatically generated and stored (or updated) in the CG video data storage unit 18 in such a manner that the virtual space self-position determination unit 15 reads the corrected trajectory data table from the trajectory data storage unit 23 and inputs the same to the virtual space rendering unit 16 when the trajectory data table is corrected, or may be generated and stored (or updated) in the CG video data storage unit 18 in such a manner that the user gives an instruction from the operation input unit 204. At that time, the CG video generated on the basis of the corrected trajectory data table may be reproduced on the monitor 202.

### 2.5 Action and effect

As described above, according to this embodiment, even in a case where there is a deviation between the coordinate system of the device 200 and the coordinate system of the virtual camera, and the virtual camera has an unintended position and posture, the user can modify the position and posture of the virtual camera via the operation input unit 204. Then, the trajectory of the virtual camera is corrected on the basis of the modification. This makes it possible to generate the CG video desired by the user.

### 3. Second embodiment

Next, an information processing system, an information processing method, and a program according to a second embodiment will be described in detail with reference to the drawings. Incidentally, in this embodiment, similarly to the first embodiment, the virtual camera system of the Inside-out method described above will be exemplified. Further, in the following description, the same configurations and operations as those of the above-described embodiment are cited, and redundant description thereof will be omitted.

### 3.1 Schematic configuration example of virtual camera

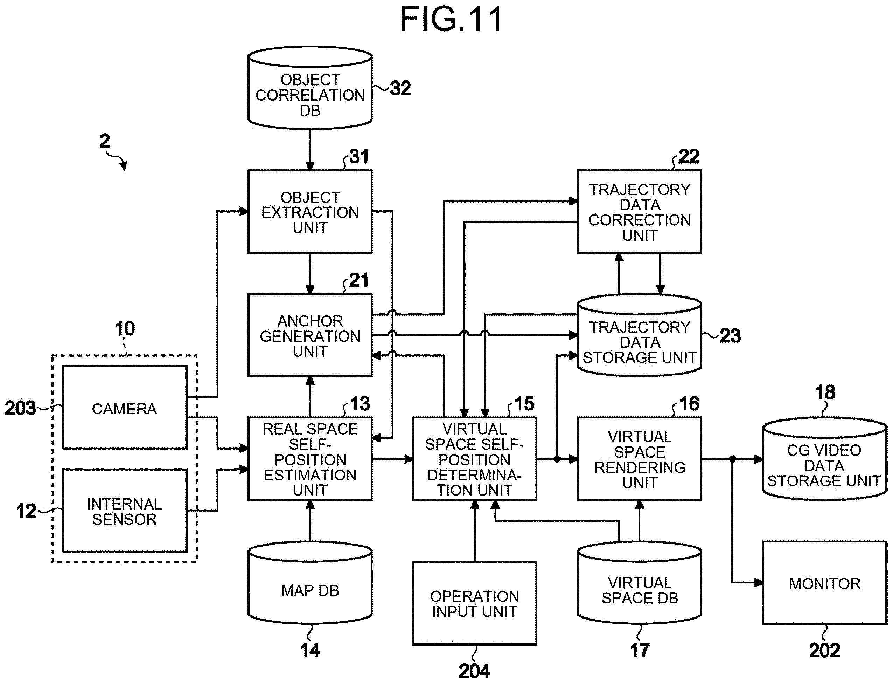

FIG. 11 is a block diagram illustrating a schematic configuration example of a virtual camera system as the information processing system according to the second embodiment. As illustrated in FIG. 11, the virtual camera system 2 includes, for example, an object extraction unit 31 and an object correlation DB 32 in addition to the same configuration as the virtual camera system 1 illustrated using FIG. 4 in the first embodiment.

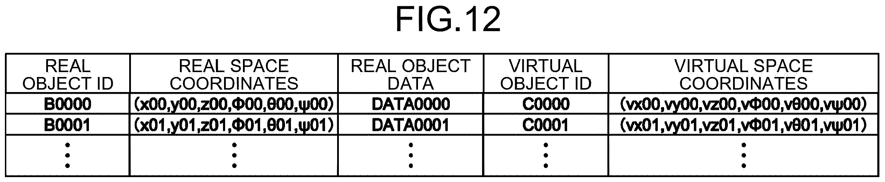

The object correlation DB 32 is, for example, a database that stores a correlation table that is created in advance and holds a correlation between a real object (hereinafter, referred to as a real object) in the real world and a virtual object (hereinafter, referred to as a virtual object) in the virtual space. FIG. 12 illustrates an example of a correlation table according to the second embodiment.

As illustrated in FIG. 12, the correlation table has a structure in which a real object ID, real space coordinates, three-dimensional object data, a virtual object ID, and virtual space coordinates are associated with each other.

The real object ID is an identifier for uniquely identifying the real object.

The real space coordinates are position and posture information indicating the position and posture of the real object in the real space. The real space coordinates may be coordinates represented in a geographic coordinate system such as a universal transverse Mercator projection or a universal polar perspective projection, or may be coordinates in a coordinate system with the real space coordinates of one real object registered in the correlation table as an origin.

The three-dimensional object data is data for recognizing a real object, and may be, for example, an image obtained by imaging a real object, three-dimensional object data generated from this image, or the like. Incidentally, the recognition processing of the real object using the three-dimensional object data may be, for example, image recognition processing on the captured image. At this time, the captured image used for the image recognition processing may be an image captured by the camera 203 of the device 200 or an image captured by an electronic device (for example, a smartphone, a digital camera, or the like) having an imaging function different from that of the device 200. However, the present invention is not limited thereto, and various kinds of recognition processing such as a process of recognizing a real object from three-dimensional object data on the basis of three-dimensional data acquired by scanning the surroundings with a laser scanner or the like can be applied.

The virtual object ID is an identifier for uniquely identifying a virtual object. The virtual object ID may be the same as the identifier of the virtual object stored in the virtual space DB 17.

The virtual space coordinates are position and posture information indicating the position and posture of the virtual object in the virtual space.

The description returns to FIG. 3. For example, the object extraction unit 31 extracts a real object included in an image captured by the camera 203 by performing image recognition processing on the image.

Then, the object extraction unit 31 specifies the real space coordinates of the real object and the virtual object ID and the virtual space coordinates of the virtual object associated with the real object by referring to the real object data registered in the object correlation DB 32.

Among the specified information, the real space coordinates of the real object are input to the real space self-position estimation unit 13 together with information (hereinafter, referred to as object area data) regarding the area of the real object in the image input from the camera 203. Incidentally, it is assumed that the same image data is input to the object extraction unit 31 and the real space self-position estimation unit 13.

In this embodiment, the real space self-position estimation unit 13 specifies the area of the real object in the image input from the camera 203 on the basis of the object area data input from the object extraction unit 31.

The real space self-position estimation unit 13 specifies the relative position (including the distance and the direction) of the device 200 with respect to the real object on the basis of the specified area of the real object, and specifies the real self-position (hereinafter, referred to as a real self-position TR) of the device 200 in the real space on the basis of the specified relative position and the real space coordinates of the real object input from the object extraction unit 31.

Then, the real space self-position estimation unit 13 calculates a difference of the self-position Tr estimated on the basis of the information input from the sensor group 10 immediately before with respect to the specified real self-position TR. This difference corresponds to the amount of deviation from the position and posture of the virtual camera intended by the user in the virtual space. In this regard, in this embodiment, the real space self-position estimation unit 13 calculates a control value for modifying the position and posture of the virtual camera on the basis of the difference, and inputs the control value to the virtual space self-position determination unit 15.

When the control value is input from the real space self-position estimation unit 13, the virtual space self-position determination unit 15 modifies the self-position Tv of the virtual camera in the virtual space as in the first embodiment.

In this embodiment, when the virtual space self-position determination unit 15 modifies the position of the virtual camera on the basis of the control value input from the real space self-position estimation unit 13, the virtual space self-position determination unit instructs the anchor generation unit 21 to register an anchor.

Then, similarly to the first embodiment, the anchor generation unit 21 and the trajectory data correction unit 22 generate and register anchor data in the trajectory data storage unit 23, and modify the trajectory data table of the corresponding section in the trajectory data storage unit 23 on the basis of the modified anchor.

### 3.2 Operation example

Next, among operations of the virtual camera system according to the second embodiment, operations different from those of the first embodiment will be described in detail with reference to the drawings.

### 3.2.1 Control value calculation flow

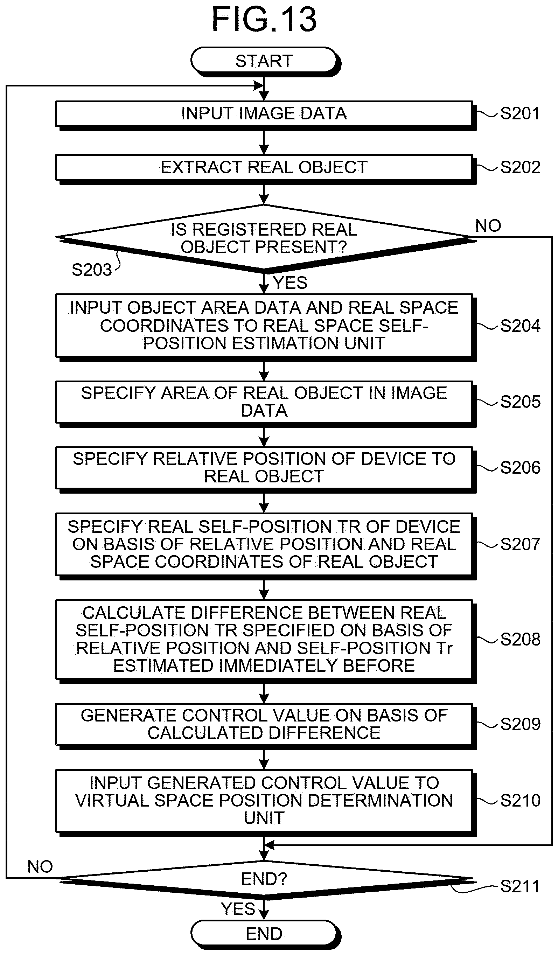

FIG. 13 is a flowchart illustrating an example of a control value calculation operation according to the second embodiment. Incidentally, the operation illustrated in FIG. 13 may be executed in parallel with the basic operation illustrated in FIG. 7 and the anchor registration operation and the trajectory correction operation illustrated in FIG. 8 in the first embodiment, for example, after imaging by the virtual camera is started.

As illustrated in FIG. 13, in this operation, image data is input from the camera 203 to the object extraction unit 31 and the real space self-position estimation unit 13 (Step S201).

Next, the object extraction unit 31 extracts a real object included in the image data by executing image recognition processing on the input image data (Step S202). Then, the object extraction unit 31 refers to the object correlation DB 32 to determine whether or not the extracted real object is registered in the correlation data (Step S203). In a case where the extracted real object is not registered in the correlation data (NO in Step S203), this operation proceeds to Step S211.

On the other hand, in a case where the extracted real object is registered in the correlation data (YES in Step S203), the object extraction unit 31 inputs the object area data indicating the area of the real object in the image data and the real space coordinates of the real object specified from the correlation data to the real space self-position estimation unit 13 (Step S204).

On the other hand, the real space self-position estimation unit 13 specifies the area of the real object in the image data on the basis of the input object area data (Step S205), and specifies the relative position of the device 200 with respect to the real object on the basis of the specified real object in the image data (Step S206).

Next, the real space self-position estimation unit 13 specifies the real self-position TR of the device 200 on the basis of the specified relative position and the real space coordinates of the real object input from the object extraction unit 31 (Step S207).

Then, the real space self-position estimation unit 13 calculates a difference of the self-position Tr estimated on the basis of the information input from the sensor group 10 immediately before with respect to the specified real self-position TR (Step S208).

Next, the real space self-position estimation unit 13 generates a control value for modifying the position and posture of the virtual camera on the basis of the difference calculated in Step S208 (Step S209), and inputs the control value to the virtual space self-position determination unit 15 (Step S210). As a result, according to the anchor registration operation and the trajectory correction operation illustrated in FIG. 8 in the first embodiment, the self-position Tv of the virtual camera in the virtual space is modified, the anchor data is registered in the trajectory data storage unit 23, and the trajectory data table of the corresponding section in the trajectory data storage unit 23 is corrected by the trajectory data correction unit 22.

In Step S211, it is determined whether or not to end this operation, and in a case where this operation is ended (YES in Step S211), this operation is ended. On the other hand, when this operation is not ended (NO in Step S211), this operation returns to Step S201, and the subsequent operations are executed.

### 3.3 Action and effect

As described above, according to this embodiment, the control value for modifying the deviation between the coordinate system of the device 200 and the coordinate system of the virtual camera is automatically generated and input to the virtual space self-position determination unit 15. As a result, even in a case where the virtual camera has an unintended position and posture, the position and posture of the virtual camera can be automatically modified. Then, the trajectory of the virtual camera is automatically corrected on the basis of the modification. This makes it possible to generate the CG video desired by the user.

Incidentally, other configurations, operations, and effects may be similar to those of the above-described embodiment, and thus a detailed description thereof will be omitted here.

### 4. Third embodiment

Next, an information processing system, an information processing method, and a program according to a third embodiment will be described in detail with reference to the drawings. Incidentally, in this embodiment, similarly to the above-described embodiments, the virtual camera system of the Inside-out method described above will be exemplified. Further, in the following description, the same configurations and operations as those of the above-described embodiment are cited, and redundant description thereof will be omitted.

In the first and second embodiments, a case where the virtual camera moves in a single virtual space in conjunction with the device has been exemplified. On the other hand, in the third embodiment, a case where the virtual camera is moved across a plurality of virtual spaces will be exemplified.

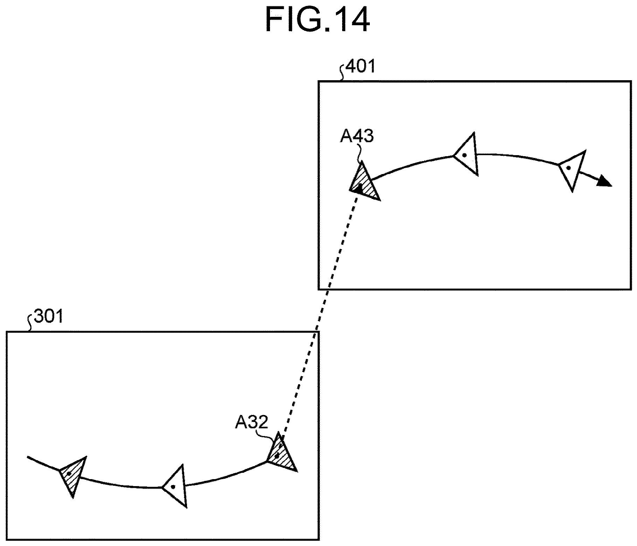

As illustrated in FIG. 14, for example, the movement of the virtual camera across the plurality of virtual spaces can be realized by linking a specific anchor (which is referred to as a first anchor) A32 in a certain virtual space (which is referred to as a first virtual space) 301 and a specific anchor (which is referred to as a second anchor) A43 in another virtual space (referred to as a second virtual space) 401 in advance, and moving (also referred to as jumping) the virtual camera to the second anchor A43 in the second virtual space 401 when the virtual camera reaches the first anchor A32 in the first virtual space 301.

A schematic configuration of the virtual camera system according to this embodiment may be similar to, for example, the virtual camera system 1 exemplified in the first embodiment or the virtual camera system 2 exemplified in the second embodiment. However, in this embodiment, the trajectory data table in the trajectory data storage unit 23 is replaced with a trajectory data table to be described later.

### 4.1 Schematic configuration example of trajectory data table

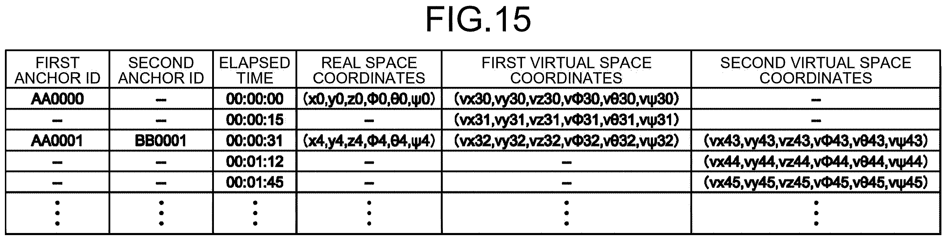

FIG. 15 is a diagram illustrating an example of a trajectory data table stored in a trajectory data storage unit according to the third embodiment. Incidentally, in this description, a case where the virtual camera moves across the first virtual space 301 and the second virtual space 401 illustrated in FIG. 14 will be illustrated.

As illustrated in FIG. 15, the trajectory data table according to this embodiment has a configuration in which the anchor ID is replaced with a first anchor ID and a second anchor ID, and the virtual space coordinates are replaced with first virtual space coordinates and second virtual space coordinates in a configuration similar to the trajectory data table described with reference to FIG. 6 in the first embodiment.

The first anchor ID is an identifier for uniquely identifying each first anchor in the first virtual space 301. The second anchor ID is an identifier for uniquely identifying each second anchor in the second virtual space.

The first virtual space coordinates are position information indicating coordinates of an anchor or a node corresponding thereto in the first virtual space. The second virtual space coordinates are position information indicating coordinates of an anchor or a node corresponding thereto in the second virtual space.

In such a structure, in a case where anchors in different virtual spaces are linked, in the trajectory data table, information (the first/second anchor ID, elapsed time, real space coordinates, and the first/second virtual space coordinates) related to two linked anchors is stored in the same record. As described above, in the trajectory data table, at least information (the first anchor ID and the second anchor ID) for specifying two anchors to be linked is associated. Incidentally, linking two anchors in different virtual spaces is referred to as grouping in this description.

As described above, by grouping two anchors in different virtual spaces, in a case where the virtual camera moving in conjunction with the movement of the device 200 reaches the first anchor A32 in the first virtual space 301, the position of the virtual camera can be moved to the second anchor A43 in the second virtual space 401. Further, the opposite is also possible.

### 4.2 Schematic configuration example of device

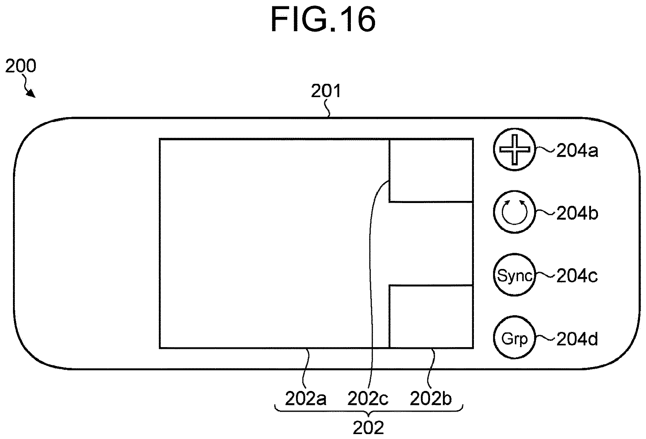

FIG. 16 is a schematic diagram illustrating a schematic configuration example of a back side (that is, the user side) of the device according to the third embodiment. As illustrated in FIG. 16, the device 200 according to this embodiment has, for example, a configuration in which a grouping button 204d as the operation input unit 204 is added in addition to the configuration similar to the device 200 described with reference to FIG. 5 in the first embodiment. Further, the monitor 202 is provided with a sub area 202c for supporting anchor grouping.

In the sub area 202c, for example, a list of first anchors and second anchors registered in the trajectory data storage unit 23 is displayed.

In a case of grouping two anchors in different virtual spaces, for example, the user presses the grouping button 204d in a state where two anchors to be grouped are selected from among the first anchors and the second anchors displayed in the sub area 202c of the monitor 202.

The grouping instruction input in this manner is input to the anchor generation unit 21 via the virtual space self-position determination unit 15, for example. The anchor generation unit 21 extracts records of two anchors selected as grouping symmetry from the trajectory data table in the trajectory data storage unit 23, collects the extracted records into one record, and updates the trajectory data table in the trajectory data storage unit 23.

### 4.3 Action and effect

As described above, according to this embodiment, the virtual camera can be moved across different virtual spaces. Therefore, for example, when a player is moved according to a predetermined route in the real space in a game or the like, the virtual space displayed on the screen of the device carried by the player can be jumped to another virtual space. Incidentally, in that case, the user in the above description corresponds to a game creator.

Other configurations, operations, and effects may be similar to those of the above-described embodiments, and thus redundant description is omitted here.

### 4.4 Modification

In the third embodiment described above, a case where the virtual space to which the virtual camera belongs is switched to another virtual space when the virtual camera reaches the specific anchor has been exemplified. However, such a configuration can also be applied to a case where the scale of the virtual space is enlarged or reduced when the virtual camera reaches the specific anchor.

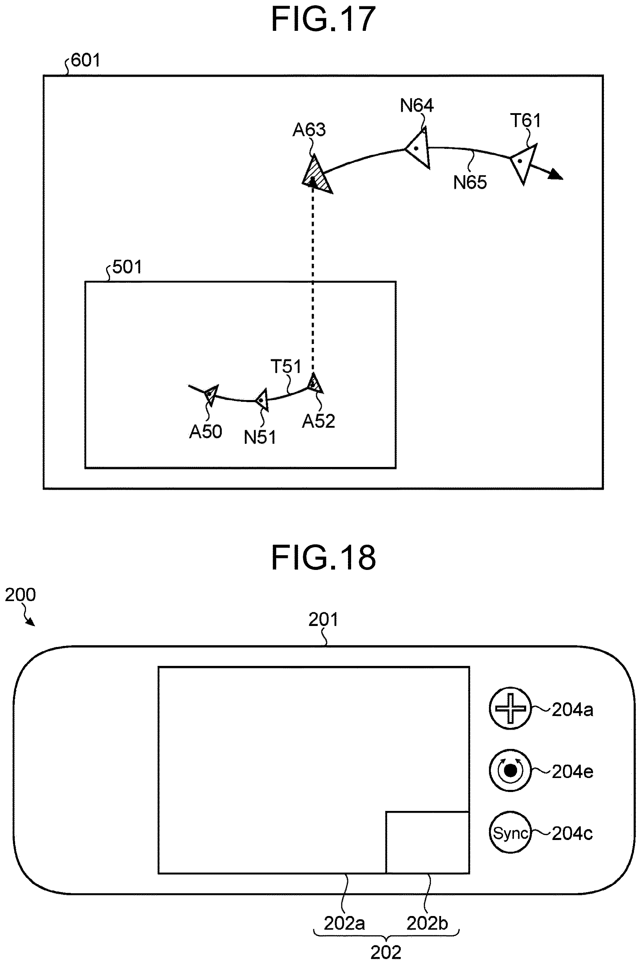

That is, as illustrated in FIG. 17, for example, a configuration can be made such that two coordinate systems (a first coordinate system 501 and a second coordinate system 601) having different scales are set for a single virtual space, and when a specific anchor (which is referred to as a first anchor A52) is reached while the virtual space is reproduced in the first coordinate system 501, the coordinate system of the virtual space is switched to the second coordinate system 601. In that case, as illustrated in FIG. 17, in a case where the scale of the second coordinate system 601 is larger than the scale of the first coordinate system 501, it is possible to achieve a viewing effect in which the character accompanying the virtual camera is suddenly enlarged in the virtual space.

Incidentally, as illustrated in FIG. 18, switching and adjustment of the scale may be realized, for example, when a scale switching button 204e (in the example illustrated in FIG. 18, the analog stick 204b is also used) is provided as the operation input unit 204 in the device 200 and is operated by the user.

The grouping of anchors for switching the scale can be managed using, for example, a trajectory data table having a configuration similar to that of the trajectory data table described with reference to FIG. 15 in the third embodiment. However, in this case, the first virtual space coordinates are replaced with first coordinate system virtual space coordinates indicating virtual space coordinates in the first coordinate system 501, and the second virtual space coordinates are replaced with second coordinate system virtual space coordinates indicating virtual space coordinates in the second coordinate system 601.

### 5. Hardware Configuration

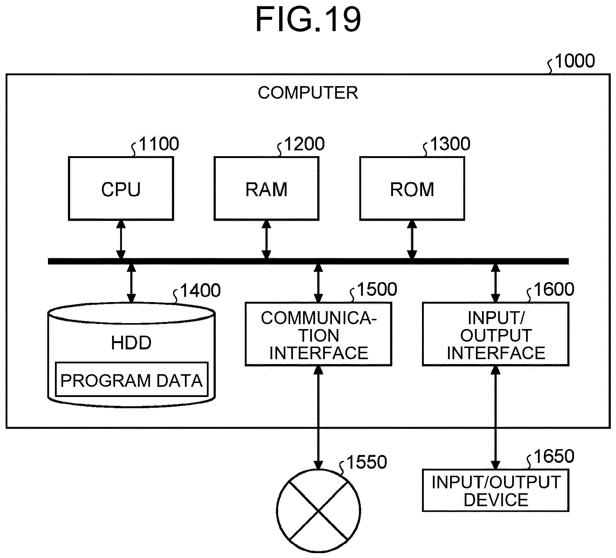

The device 100/200 and the server (the server communicably connected to the device 200) for realizing the virtual camera system 1 or 2 according to each embodiment described above are realized by a computer 1000 having a configuration as illustrated in FIG. 19, for example.

As illustrated in FIG. 19, the computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops the program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on the hardware of the computer 1000, and the like.

The HDD 1400 is a computer-readable recording medium that non-transiently records a program executed by the CPU 1100, data used by the program, and the like. Specifically, the HDD 1400 is a recording medium that records an image processing program according to the present disclosure as an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. Further, the CPU 1100 transmits data to an output device such as a display, a speaker, or a printer via the input/output interface 1600. Further, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the server according to the above-described embodiment, the CPU 1100 of the computer 1000 executes the program loaded on the RAM 1200 to implement at least one of the functions of the real space self-position estimation unit 13, the virtual space self-position determination unit 15, the virtual space rendering unit 16, the anchor generation unit 21, the trajectory data correction unit 22, and the object extraction unit 31. Further, the HDD 1400 stores the program according to the present disclosure and the data stored in at least one of the map DB 14, the virtual space DB 17, the CG video data storage unit 18, the trajectory data storage unit 23, and the object correlation DB 32. Incidentally, the CPU 1100 reads the program data 1450 from the HDD 1400 and executes the program data, but as another example, these programs may be acquired from another device via the external network 1550.

Although the embodiments of the present disclosure have been described above, the technical scope of the present disclosure is not limited to each of the above-described embodiments as it is, and various modifications may be made without departing from the gist of the present disclosure. Further, the component may be combined suitably over different embodiments and the modification.

The effects in each embodiment described in this specification are merely examples and are not limited, and other effects may be present.

Each of the above-described embodiments may be used alone, or may be used in combination with another embodiment.

## Claims

1. An information processing system (1, 2) comprising:
an acquisition unit (10) that is configured to acquire first position information of a device (100, 200) existing in a real space, the first position information regarding the real space;
a trajectory generation unit (15) that is configured to generate a movement trajectory (Tv) of a viewpoint set in a virtual space on a basis of the first position information, the movement trajectory (Tv) regarding the virtual space;
a first modification unit (15) that is configured to modify second position information of the viewpoint in the virtual space, the second position information regarding the virtual space; and
a correction unit (22) that is configured to correct the movement trajectory (Tv) on a basis of the modification of the second position information,
the system being **characterised in that** it further comprises:
a trajectory storage unit (23) that is configured to store second position information of the viewpoint in the virtual space along a time series to hold the movement trajectory (Tv), wherein
the correction unit (22) is configured to correct the movement trajectory (Tv) held in the trajectory storage unit (23).

2. The information processing system (1, 2) according to claim 1, wherein
the acquisition unit (10) includes
at least one of an external sensor (203) that is configured to acquire external information around the device (100, 200) and an internal sensor (12) that is configured to acquire internal information inside the device (100, 200), and
an estimation unit (13) that is configured to estimate the first position information on a basis of at least one of the external information and the internal information.

3. The information processing system (1, 2) according to any one of the previous claims, wherein
the first modification unit (15) includes an operation input unit (204) for a user to input a modification instruction for the second position information of the viewpoint in the virtual space, and modifies the second position information on a basis of the modification instruction, and wherein
the operation input unit (204) includes
a first operation input unit (204a) for the user to input a modification instruction for a position of the viewpoint in the virtual space, and
a second operation input unit (204b) for the user to input a modification instruction for at least one of the position and a direction of the viewpoint in the virtual space.

4. The information processing system (1, 2) according to any one of the previous claims, further comprising:
a camera (203) provided in the device existing in the real space;
an extraction unit (31) that is configured to extract an object included in the image data from the image data acquired by the camera (203); and
a second modification unit (13) that is configured to modify the first position information of the device on a basis of the position of the object extracted by the extraction unit (31) in the real space, wherein
the first modification unit (15) is configured to modify the second position information on a basis of the modification of the first position information by the second modification unit (13).

5. The information processing system (1, 2) according to claim 4, wherein
the second modification unit (13) is configured to specify a real position of the device (100, 200) in the real space from a relative position between the object and the device (100, 200) in the real space, and modifies the first position information on a basis of the real position.

6. The information processing system (1, 2) according to claim 1, further comprising:
an anchor generation unit (21) that is configured to generate anchor information for associating the first position information and the second position information, wherein
the trajectory storage unit (23) is configured to hold the anchor information as a part of the movement trajectory (Tv).

7. The information processing system (1, 2) according to claim 6, wherein
the anchor generation unit (21) is configured to generate the anchor information on a basis of an instruction from the user.

8. The information processing system (1, 2) according to claim 4, further comprising:
an anchor generation unit (21) that is configured to generate anchor information indicating a correspondence relationship between the first position information and the second position information, wherein
the trajectory storage unit (23) is configured to hold the anchor information as a part of the movement trajectory (Tv), and
the anchor generation unit (21) is configured to generate the anchor information in a case where the extraction unit (31) is configured to extract the object from the image data.

9. The information processing system (1, 2) according to claim 6, wherein
the virtual space includes a first virtual space and a second virtual space different from the first virtual space, and
the trajectory storage unit (23) is configured to store first anchor information including the second position information in the first virtual space and second anchor information including the second position information in the second virtual space in association with each other; and further comprising:
a determination unit (15) that is configured to determine a position of the viewpoint in the first virtual space, wherein
in a case where the viewpoint reaches a position in the first virtual space indicated by the first anchor information, the determination unit (15) is configured to determine the position of the viewpoint as a position in the second virtual space indicated by the second anchor information.

10. The information processing system (1, 2) according to claim 6, wherein
the virtual space is reproduced by a first coordinate system of a first scale and a second coordinate system of a second scale different from the first scale, and
the trajectory storage unit (23) is configured to store first anchor information including the second position information on the first coordinate system and second anchor information including the second position information on the second coordinate system in association with each other; and further comprising:
a determination unit (15) that is configured to determine a position of the viewpoint in the virtual space, wherein
in a case where the viewpoint reaches a position indicated by the second position information on the first coordinate system included in the first anchor information, the determination unit (15) is configured to determine the position of the viewpoint as a position indicated by the second position information on the second coordinate system included in the second anchor information.

11. The information processing system (1, 2) according to any one of the previous claims, wherein
the first position information includes information on a position of the device (100, 200) in the real space and information on a posture of the device in the real space, and
the second position information includes information on a position of the viewpoint in the virtual space and information on a direction and an inclination of the viewpoint in the virtual space; and/or further comprising:
a video generation unit (16) that is configured to generate a video by rendering an inside of the virtual space on a basis of the viewpoint.

12. A computer implemented information processing method comprising:
acquiring first position information of a device (100, 200) existing in a real space;
generating a movement trajectory (Tv) of a viewpoint set in a virtual space on a basis of the first position information;
modifying second position information of the viewpoint in the virtual space; and
correcting the movement trajectory (Tv) on a basis of the modification of the second position information,
the method being **characterised in that** it further comprises:
storing second position information of the viewpoint in the virtual space along a time series to hold the movement trajectory (Tv), wherein
correcting the movement trajectory (Tv) comprises correcting the held movement trajectory (Tv).

13. The computer implemented information processing method according to claim 12, wherein
a CG video within an angle of view of a virtual camera is generated by rendering an inside of the virtual space using the movement trajectory (Tv) corrected on the basis of the modification of the second position information.

14. A program for causing an information processing device of any one of the claims 1 to 11 to execute the information processing method of claim 12 or 13.

## Patentansprüche

1. Informationsverarbeitungssystem (1, 2), umfassend:
eine Erfassungseinheit (10), die konfiguriert ist, um erste Positionsinformationen einer Vorrichtung (100, 200), die in einem realen Raum vorhanden ist, zu erfassen, wobei die ersten Positionsinformationen den realen Raum betreffen;
eine Trajektorienerzeugungseinheit (15), die konfiguriert ist, um eine Bewegungstrajektorie (Tv) eines in einem virtuellen Raum festgelegten Blickpunkts basierend auf den ersten Positionsinformationen zu erzeugen, wobei die Bewegungstrajektorie (Tv) den virtuellen Raum betrifft;
eine erste Modifikationseinheit (15), die konfiguriert ist, um zweite Positionsinformationen des Blickpunkts in dem virtuellen Raum zu modifizieren, wobei die zweiten Positionsinformationen den virtuellen Raum betreffen; und
eine Korrektureinheit (22), die konfiguriert ist, um die Bewegungstrajektorie (Tv) basierend auf der Modifikation der zweiten Positionsinformationen zu korrigieren, wobei das System **dadurch gekennzeichnet ist, dass** es ferner umfasst:
eine Trajektorienspeichereinheit (23), die konfiguriert ist, um zweite Positionsinformationen des Blickpunkts in dem virtuellen Raum entlang einer Zeitreihe zu speichern, um die Bewegungstrajektorie (Tv) zu halten, wobei
die Korrektureinheit (22) konfiguriert ist, um die Bewegungstrajektorie (Tv), die in der Trajektorienspeichereinheit (23) gehalten wird, zu korrigieren.

2. Informationsverarbeitungssystem (1, 2) nach Anspruch 1, wobei
die Erfassungseinheit (10) einschließt
mindestens einen externen Sensor (203), der konfiguriert ist, um externe Informationen um die Vorrichtung (100, 200) herum zu erfassen, und einen internen Sensor (12), der konfiguriert ist, um interne Informationen innerhalb der Vorrichtung (100, 200) zu erfassen, und
eine Schätzeinheit (13), die konfiguriert ist, um die ersten Positionsinformationen basierend auf mindestens einer der externen Informationen und der internen Informationen zu schätzen.

3. Informationsverarbeitungssystem (1, 2) nach einem der vorstehenden Ansprüche, wobei
die erste Modifikationseinheit (15) eine Betriebseingabeeinheit (204) für einen Benutzer einschließt, um eine Modifikationsanweisung für die zweiten Positionsinformationen des Blickpunkts in dem virtuellen Raum einzugeben, und die zweiten Positionsinformationen basierend auf der Modifikationsanweisung modifiziert, und wobei
die Betriebseingabeeinheit (204) einschließt
eine erste Betriebseingabeeinheit (204a) für den Benutzer, um eine Modifikationsanweisung für eine Position des Blickpunkts in dem virtuellen Raum einzugeben, und
eine zweite Betriebseingabeeinheit (204b) für den Benutzer, um eine Modifikationsanweisung für mindestens eine der Position und einer Richtung des Blickpunkts in dem virtuellen Raum einzugeben.

4. Informationsverarbeitungssystem (1, 2) nach einem der vorstehenden Ansprüche, ferner umfassend:
eine Kamera (203), die in der in dem realen Raum vorhandenen Vorrichtung vorgesehen ist;
eine Extraktionseinheit (31), die konfiguriert ist, um ein in den Bilddaten enthaltenes Objekt aus den von der Kamera (203) erfassten Bilddaten zu extrahieren; und
eine zweite Modifikationseinheit (13), die konfiguriert ist, um die ersten Positionsinformationen der Vorrichtung basierend auf der Position des durch die Extraktionseinheit (31) extrahierten Objekts in dem realen Raum zu modifizieren, wobei
die erste Modifikationseinheit (15) konfiguriert ist, um die zweiten Positionsinformationen basierend auf der Modifikation der ersten Positionsinformationen durch die zweite Modifikationseinheit (13) zu modifizieren.

5. Informationsverarbeitungssystem (1, 2) nach Anspruch 4, wobei
die zweite Modifikationseinheit (13) konfiguriert ist, um eine reale Position der Vorrichtung (100, 200) in dem realen Raum aus einer relativen Position zwischen dem Objekt und der Vorrichtung (100, 200) in dem realen Raum zu spezifizieren, und die ersten Positionsinformationen basierend auf der realen Position zu modifizieren.

6. Informationsverarbeitungssystem (1, 2) nach Anspruch 1, ferner umfassend:
eine Ankererzeugungseinheit (21), die konfiguriert ist, um Ankerinformationen zu erzeugen, um die ersten Positionsinformationen und die zweiten Positionsinformationen zu verknüpfen, wobei
die Trajektorienspeichereinheit (23) konfiguriert ist, um die Ankerinformationen als Teil der Bewegungstrajektorie (Tv) zu halten.

7. Informationsverarbeitungssystem (1, 2) nach Anspruch 6, wobei
die Ankererzeugungseinheit (21) konfiguriert ist, um die Ankerinformationen basierend auf einer Anweisung des Benutzers zu erzeugen.

8. Informationsverarbeitungssystem (1, 2) nach Anspruch 4, ferner umfassend:
eine Ankererzeugungseinheit (21), die konfiguriert ist, um Ankerinformationen zu erzeugen, die eine Entsprechungsbeziehung zwischen den ersten Positionsinformationen und den zweiten Positionsinformationen angeben, wobei
die Trajektorienspeichereinheit (23) konfiguriert ist, um die Ankerinformationen als Teil der Bewegungstrajektorie (Tv) zu halten, und
die Ankererzeugungseinheit (21) konfiguriert ist, um die Ankerinformationen in einem Fall zu erzeugen, in dem die Extraktionseinheit (31) konfiguriert ist, um das Objekt aus den Bilddaten zu extrahieren.

9. Informationsverarbeitungssystem (1, 2) nach Anspruch 6, wobei
der virtuelle Raum einen ersten virtuellen Raum und einen zweiten virtuellen Raum einschließt, der sich von dem ersten virtuellen Raum unterscheidet, und
die Trajektorienspeichereinheit (23) konfiguriert ist, um erste Ankerinformationen, die die zweiten Positionsinformationen einschließen, in dem ersten virtuellen Raum und zweite Ankerinformationen, die die zweiten Positionsinformationen einschließen, in dem zweiten virtuellen Raum in Zuordnung zueinander zu speichern; und ferner umfassend:
eine Bestimmungseinheit (15), die konfiguriert ist, um eine Position des Blickpunkts in dem ersten virtuellen Raum zu bestimmen, wobei
in einem Fall, in dem der Blickpunkt eine Position in dem ersten virtuellen Raum erreicht, der durch die ersten Ankerinformationen angegeben wird, die Bestimmungseinheit (15) konfiguriert ist, um die Position des Blickpunkts als eine Position in dem zweiten virtuellen Raum zu bestimmen, die durch die zweiten Ankerinformationen angegeben wird.

10. Informationsverarbeitungssystem (1, 2) nach Anspruch 6, wobei
der virtuelle Raum durch ein erstes Koordinatensystem mit einem ersten Maßstab und ein zweites Koordinatensystem mit einem zweiten Maßstab, der sich vom ersten Maßstab unterscheidet, wiedergegeben wird, und
die Trajektorienspeichereinheit (23) konfiguriert ist, um erste Ankerinformationen einschließlich der zweiten Positionsinformationen auf dem ersten Koordinatensystem und zweite Ankerinformationen einschließlich der zweiten Positionsinformationen auf dem zweiten Koordinatensystem in Zuordnung zueinander zu speichern; und ferner umfassend:
eine Bestimmungseinheit (15), die konfiguriert ist, um eine Position des Blickpunkts in dem virtuellen Raum zu bestimmen, wobei
in einem Fall, in dem der Blickpunkt eine Position erreicht, die durch die zweiten Positionsinformationen auf dem ersten Koordinatensystem, das in der ersten Ankerinformation eingeschlossen ist, angegeben wird, die Bestimmungseinheit (15) konfiguriert ist, um die Position des Blickpunkts als eine Position zu bestimmen, die durch die zweiten Positionsinformationen auf dem zweiten Koordinatensystem, das in der zweiten Ankerinformation eingeschlossen ist, angegeben wird.

11. Informationsverarbeitungssystem (1, 2) nach einem der vorstehenden Ansprüche, wobei
die ersten Positionsinformationen Informationen über eine Position der Vorrichtung (100, 200) in dem realen Raum und Informationen über eine Haltung der Vorrichtung in dem realen Raum einschließen, und
die zweiten Positionsinformationen Informationen über eine Position des Blickpunkts in dem virtuellen Raum und Informationen über eine Richtung und eine Neigung des Blickpunkts in dem virtuellen Raum einschließen; und/oder ferner umfassend:
eine Videoerzeugungseinheit (16), die konfiguriert ist, um ein Video zu erzeugen, indem sie ein Inneres des virtuellen Raums basierend auf dem Blickpunkt wiedergibt.

12. Computerimplementiertes Informationsverarbeitungsverfahren, umfassend:
Erfassen von ersten Positionsinformationen einer Vorrichtung (100, 200), die in einem realen Raum vorhanden ist;
Erzeugen einer Bewegungstrajektorie (Tv) eines in einem virtuellen Raum eingestellten Blickpunkts basierend auf den ersten Positionsinformationen;
Modifizieren zweiter Positionsinformationen des Blickpunkts in dem virtuellen Raum; und
Korrigieren der Bewegungstrajektorie (Tv) basierend auf der Modifikation der zweiten Positionsinformationen, wobei das Verfahren **dadurch gekennzeichnet, dass** es ferner umfasst:
Speichern zweiter Positionsinformationen des Blickpunkts in dem virtuellen Raum entlang einer Zeitreihe, um die Bewegungstrajektorie (Tv) zu halten, wobei
das Korrigieren der Bewegungstrajektorie (Tv) das Korrigieren der gehaltenen Bewegungstrajektorie (Tv) umfasst.

13. Computerimplementiertes Informationsverarbeitungsverfahren nach Anspruch 12, wobei
ein CG-Video innerhalb eines Blickwinkels einer virtuellen Kamera erzeugt wird, indem ein Innenraum des virtuellen Raums unter Verwendung der basierend auf der Modifikation der zweiten Positionsinformationen korrigierten Bewegungstrajektorie (Tv) wiedergegeben wird.

14. Programm zum Veranlassen einer Informationsverarbeitungsvorrichtung nach einem der Ansprüche 1 bis 11, das Informationsverarbeitungsverfahren nach Anspruch 12 oder 13 auszuführen.

## Revendications

1. Système de traitement d'informations (1, 2) comprenant :
une unité d'acquisition (10) qui est configurée pour acquérir des premières informations de position d'un dispositif (100, 200) existant dans un espace réel, les premières informations de position concernant l'espace réel ;
une unité de génération de trajectoire (15) qui est configurée pour générer une trajectoire de déplacement (Tv) d'un point de vue défini dans un espace virtuel en fonction des premières informations de position, la trajectoire de déplacement (Tv) concernant l'espace virtuel ;
une première unité de modification (15) qui est configurée pour modifier des secondes informations de position du point de vue dans l'espace virtuel, les secondes informations de position concernant l'espace virtuel ; et
une unité de correction (22) qui est configurée pour corriger la trajectoire de déplacement (Tv) en fonction de la modification des secondes informations de position, le système étant **caractérisé en ce qu'**il comprend en outre :
une unité de stockage de trajectoire (23) qui est configurée pour stocker des secondes informations de position du point de vue dans l'espace virtuel le long d'une série chronologique pour conserver la trajectoire de déplacement (Tv), dans lequel
l'unité de correction (22) est configurée pour corriger la trajectoire de déplacement (Tv) conservée dans l'unité de stockage de trajectoire (23).

2. Système de traitement d'informations (1, 2) selon la revendication 1, dans lequel
l'unité d'acquisition (10) comporte
au moins l'un parmi un capteur externe (203) qui est configuré pour acquérir des informations externes autour du dispositif (100, 200) et un capteur interne (12) qui est configuré pour acquérir des informations internes à l'intérieur du dispositif (100, 200), et
une unité d'estimation (13) qui est configurée pour estimer les premières informations de position en fonction d'au moins l'une parmi les informations externes et les informations internes.

3. Système de traitement d'informations (1, 2) selon l'une quelconque des revendications précédentes, dans lequel
la première unité de modification (15) comporte une unité d'entrée d'opération (204) permettant à un utilisateur d'entrer une instruction de modification pour les secondes informations de position du point de vue dans l'espace virtuel, et modifie les secondes informations de position en fonction de l'instruction de modification, et dans lequel
l'unité d'entrée d'opération (204) comporte
une première unité d'entrée d'opération (204a) permettant à l'utilisateur d'entrer une instruction de modification pour une position du point de vue dans l'espace virtuel, et
une seconde unité d'entrée d'opération (204b) permettant à l'utilisateur d'entrer une instruction de modification pour au moins l'une parmi la position et une direction du point de vue dans l'espace virtuel.

4. Système de traitement d'informations (1, 2) selon l'une quelconque des revendications précédentes, comprenant en outre :
une caméra (203) fournie dans le dispositif existant dans l'espace réel ;
une unité d'extraction (31) qui est configurée pour extraire un objet inclus dans les données d'image à partir des données d'image acquises par la caméra (203) ; et
une seconde unité de modification (13) qui est configurée pour modifier les premières informations de position du dispositif en fonction de la position de l'objet extrait par l'unité d'extraction (31) dans l'espace réel, dans lequel
la première unité de modification (15) est configurée pour modifier les secondes informations de position en fonction de la modification des premières informations de position par la seconde unité de modification (13).

5. Système de traitement d'informations (1, 2) selon la revendication 4, dans lequel
la seconde unité de modification (13) est configurée pour spécifier une position réelle du dispositif (100, 200) dans l'espace réel à partir d'une position relative entre l'objet et le dispositif (100, 200) dans l'espace réel, et modifie les premières informations de position en fonction de la position réelle.

6. Système de traitement d'informations (1, 2) selon la revendication 1, comprenant en outre :
une unité de génération d'ancrage (21) qui est configurée pour générer des informations d'ancrage permettant d'associer les premières informations de position et les secondes informations de position, dans lequel
l'unité de stockage de trajectoire (23) est configurée pour conserver les informations d'ancrage en tant que partie de la trajectoire de déplacement (Tv).

7. Système de traitement d'informations (1, 2) selon la revendication 6, dans lequel
l'unité de génération d'ancrage (21) est configurée pour générer les informations d'ancrage en fonction d'une instruction provenant de l'utilisateur.

8. Système de traitement d'informations (1, 2) selon la revendication 4, comprenant en outre :
une unité de génération d'ancrage (21) qui est configurée pour générer des informations d'ancrage indiquant une relation de correspondance entre les premières informations de position et les secondes informations de position, dans lequel
l'unité de stockage de trajectoire (23) est configurée pour conserver les informations d'ancrage en tant que partie de la trajectoire de déplacement (Tv), et
l'unité de génération d'ancrage (21) est configurée pour générer les informations d'ancrage dans un cas où l'unité d'extraction (31) est configurée pour extraire l'objet des données d'image.

9. Système de traitement d'informations (1, 2) selon la revendication 6, dans lequel
l'espace virtuel comporte un premier espace virtuel et un second espace virtuel différent du premier espace virtuel, et
l'unité de stockage de trajectoire (23) est configurée pour stocker des premières informations d'ancrage comportant les secondes informations de position dans le premier espace virtuel et des secondes informations d'ancrage comportant les secondes informations de position dans le second espace virtuel en association les unes avec les autres ; et comprenant en outre :
une unité de détermination (15) qui est configurée pour déterminer une position du point de vue dans le premier espace virtuel, dans lequel
dans un cas où le point de vue atteint une position dans le premier espace virtuel indiquée par les premières informations d'ancrage, l'unité de détermination (15) est configurée pour déterminer la position du point de vue en tant que position dans le second espace virtuel indiquée par les secondes informations d'ancrage.

10. Système de traitement d'informations (1, 2) selon la revendication 6, dans lequel
l'espace virtuel est reproduit par un premier système de coordonnées d'une première échelle et un second système de coordonnées d'une seconde échelle différente de la première échelle, et
l'unité de stockage de trajectoire (23) est configurée pour stocker des premières informations d'ancrage comportant les secondes informations de position sur le premier système de coordonnées et des secondes informations d'ancrage comportant les secondes informations de position sur le second système de coordonnées en association les unes avec les autres ; et comprenant en outre :
une unité de détermination (15) qui est configurée pour déterminer une position du point de vue dans l'espace virtuel, dans lequel
dans un cas où le point de vue atteint une position indiquée par les secondes informations de position sur le premier système de coordonnées inclus dans les premières informations d'ancrage, l'unité de détermination (15) est configurée pour déterminer la position du point de vue en tant que position indiquée par les secondes informations de position sur le second système de coordonnées inclus dans les secondes informations d'ancrage.

11. Système de traitement d'informations (1, 2) selon l'une quelconque des revendications précédentes, dans lequel
les premières informations de position comportent des informations relatives à une position du dispositif (100, 200) dans l'espace réel et des informations relatives à une posture du dispositif dans l'espace réel, et
les secondes informations de position comportent des informations relatives à une position du point de vue dans l'espace virtuel et des informations relatives à une direction et à une inclinaison du point de vue dans l'espace virtuel ; et/ou comprenant en outre :
une unité de génération vidéo (16) qui est configurée pour générer une vidéo en restituant un intérieur de l'espace virtuel en fonction du point de vue.

12. Procédé de traitement d'informations implémenté par ordinateur comprenant :
l'acquisition de premières informations de position d'un dispositif (100, 200) existant dans un espace réel ;
la génération d'une trajectoire de déplacement (Tv) d'un point de vue défini dans un espace virtuel en fonction des premières informations de position ;
la modification de secondes informations de position du point de vue dans l'espace virtuel ; et
la correction de la trajectoire de déplacement (Tv) en fonction de la modification des secondes informations de position, le procédé étant **caractérisé en ce qu'**il comprend en outre :
le stockage de secondes informations de position du point de vue dans l'espace virtuel le long d'une série chronologique pour conserver la trajectoire de déplacement (Tv), dans lequel
la correction de la trajectoire de déplacement (Tv) comprend la correction de la trajectoire de déplacement (Tv) conservée.

13. Procédé de traitement d'informations implémenté par ordinateur selon la revendication 12, dans lequel
une vidéo de synthèse à l'intérieur d'un angle de vue d'une caméra virtuelle est générée en restituant un intérieur de l'espace virtuel à l'aide de la trajectoire de déplacement (Tv) corrigée en fonction de la modification des secondes informations de position.

14. Programme permettant d'amener un dispositif de traitement d'informations selon l'une quelconque des revendications 1 à 11 à exécuter le procédé de traitement d'informations selon la revendication 12 ou 13.
